# EUROPEAN PATENT SPECIFICATION

(11) **EP 3 235 689 B1**
(45) Date of publication and mention of the grant of the patent: **14.08.2019**
(21) Application number: 17382145.5
(22) Date of filing: 22.03.2017
(51) Int. Cl.: B60R 13/02

(54) **SECURING DEVICE FOR A VEHICLE PART**
BEFESTIGUNGSVORRICHTUNG FÜR EIN FAHRZEUGTEIL
DISPOSITIF DE FIXATION POUR UNE PIÈCE DE VÉHICULE

(30) Priority: 22.04.2016 ES 201630511
(43) Date of publication of application: 25.10.2017
(73) Proprietor: Seat, S.A., 08760 Martorell (ES)
(72) Inventor: REINA JIMÉNEZ, REMIGIO, 08760 BARCELONA (ES)
(74) Representative: Elzaburu S.L.P.

(56) References cited:
- EP-A1- 1 743 805
- WO-A1-2010/097193
- DE-A1- 2 621 713
- DE-A1-102006 054 618

## Description

### SUBJECT MATTER OF THE INVENTION

The present patent application relates to a securing device for a vehicle part according to Claim 1, which incorporates significant innovations and advantages.

### BACKGROUND TO THE INVENTION

Various securing devices for vehicle parts are presently known. Note that when it is a case where the part is secured to the vehicle body, this is usually done using an additional component.

Also known in the prior art, as may be seen in document CN201116562, is a securing member for securing decorative parts and lamps of a vehicle. It is composed of an elastic nut and a securing unit. The elastic nut is U-shaped. One end of the elastic nut has a locking means which is extended outwards. The device is not very versatile in terms of mounting and it does not appear to be suitable for multiple configurations.

Also known in the prior art, as may be seen in document US6416125, is a device for mounting a headrest support assembly on a seat back frame. The assembly includes components that are injection moulded in situ over enlarged flanges of a connector link. However, this does not appear to be a generic solution that can be extrapolated to the mounting of various parts on the body of a vehicle.

Document DE 26 21 713 A1 discloses a part comprising a securing device, in which the part is made of plastic, obtained by injection moulding, in which the part comprises a main body, and in which the securing device comprises a securing member and a connecting member for connecting said securing member to the main body, wherein the main body and the securing device are obtained by means of the same injection moulding process, and wherein the connecting member is elongate, the connecting member and the securing member being arranged substantially in the same plane.

Thus, there is clearly still a need for a securing device for a vehicle part, preferably to the vehicle body, in which it is not necessary for the operator to provide an additional mounting component, thereby optimizing the assembly process. This would eliminate the need to go and fetch the additional mounting component, as well as facilitating the operation of placing said member in the bolt or the like.

### DESCRIPTION OF THE INVENTION

The present invention proposes incorporating the securing means of a main part in said part, preferably by means of plastic strips. Subsequently, the entire assembly is injection moulded in the same mould in which said main part is produced.

To be more specific, the main part is usually an internal finishing part. Usually, it is a large part that has the function of improving the internal finish or trim of the vehicle, hiding areas and/or components of the vehicle so that they are not accessible to the user. These main internal finishing parts are positioned on the vehicle body by means of bolts that pass through holes in said main parts. Said bolts are also used for securing said plastic parts.

The aforementioned object is achieved by means of a vehicle part according to claim 1, and by means of an assembly method according to claim 8.

According to the present invention, said main part, obtained by injection moulding, incorporates a strip, hinge, film or a zone of flexible plastic for connecting the securing member, which is used to secure the main part to the vehicle body, to the plastic part or internal trim, or main part. Said zone of flexible plastic must have small dimensions, especially in terms of thickness, precisely to ensure that it is flexible.

Thus, and more specifically, the securing device for a vehicle part, in which the part is made of plastic, obtained by injection moulding, and in which the part comprises a main body, comprises a securing member and a connecting member for connecting said securing member to the main body, in which the main body and the securing device are obtained by means of the same injection moulding process, said connecting member being elongate. Such an elongate configuration is what gives the connecting member the flexibility necessary to obtain the advantages derived from the present invention. It is important to note that the material from which the vehicle part is made is a plastic that, under conditions of use, gives the part rigid and stress-resistant properties. Because the part of the present invention is injection moulded in a single step, said part, the securing member and the connecting member are all made of the same material. Therefore, the characteristic flexible properties of the connecting member are due to the geometry thereof, in that it is particularly elongate, such that it may be easily manipulated and allows relative movement of the securing member with respect to the vehicle part. Other additional advantages are:
- The operator cannot fail to put the securing member in place when mounting the main part, since said securing members are integrated and very close to the mounting area.
- It is impossible to put the wrong securing member in place when mounting the main part, since the correct securing members are integrated adjacent to the area of use thereof.
- Saving on the cost of separate securing members.
- Saving on assembly time.

In a preferred embodiment of the invention, the connecting member is elongate such that the length thereof is greater than a length of the securing member. In this way, the connecting member provides sufficient clearance, allowing the securing member to be reoriented and positioned easily, so that it may be inserted and mounted at the intended location.

More particularly, the connecting member is substantially in the form of a strip such that the thickness thereof is substantially less than a width of the connecting member. The thickness of the connecting member refers to the dimension in the direction of demoulding or opening of the mould from which the main part is obtained. Accordingly, in a plane perpendicular to the direction of demoulding, the connecting member has a length substantially greater than its width. Such a configuration in the form of a strip ensures flexibility mainly by virtue of its dimensions, that is to say, with a very small thickness with respect to the width and length of the connecting member, even in the case where the constituent plastic is not especially flexible.

According to another aspect of the invention, the injection moulding process comprises a single step of injection moulding in the same injection mould. In other words, the entire component of the main part plus the securing device are obtained by means of the same injection moulding process, avoiding additional steps such as over-moulding or bi-injection moulding. In this way, the complete component forming the subject matter of the present injection is produced quickly and in a single step, facilitating and simplifying the production method thereof.

According to the invention, the connecting member and the securing member are substantially perpendicular to the direction of demoulding from the injection mould. The part may thus be demoulded without the need to design additional sliders in the mould, increasing the simplicity thereof and, therefore, lowering the cost of the injection moulding machine. It should be noted that, for this purpose, both the connecting member and the securing member must be arranged substantially in the same plane, referred to as the demoulding plane.

Advantageously, the part is an internal component of the vehicle, in which the part is visible from the passenger compartment of the vehicle. As discussed above, the vehicle part is, in a preferred embodiment, a large component of the vehicle interior. This part is positioned and secured to the vehicle body using bolts welded on said body. These bolts pass through the part, through specially designed holes. The securing member is used to secure the internal vehicle part to the bolts of the vehicle body. Alternatively, the securing member is used for coupling the part to another part or component of the vehicle, other than the vehicle body, such as other plastic parts.

Thus, and in a preferred embodiment of the invention, the securing member is a plug, such that said securing member is embodied as a type of component with proven properties and reliability in the automotive industry. Thus, the securing member is a nut or a plug intended to secure the internal vehicle part to the bolt on the vehicle body.

Advantageously, the securing member is a screw or an expandable peg or a pin, in order to prevent any leakage of fluid or undesired transfer of fluid between internal compartments of the vehicle, it being possible to create watertight areas if desired. Thus, the securing member will be comprised in the internal vehicle part, in an area very close to the hole to be plugged. During the mounting and assembly process, it will be very easy for the user to bring the plug to the hole, preventing the user from forgetting the plug or inserting the wrong plug.

According to another aspect of the invention, the connecting member is capable of bending so that the securing member can rotate towards the connecting member by at least 180° from its rest position. "Bending" is understood to mean the connecting member folding over, that is to say, rotating in a plane that cuts the surface of the strip perpendicularly and longitudinally. "Rest position" means the natural position based on the balance of forces between the weight of the connecting member plus the weight of the securing member with the resistance to bending for a given orientation of the main part. Accordingly, the geometry of the connecting member makes it possible to go from a rest situation in which the connecting member and the securing member are substantially in the same plane, the securing member being an extension of the connecting member, to a second position in which the securing member has rotated by 180° without the connecting member breaking. In this way, and by rotating by at least 180°, a plug-type securing member may be oriented and placed in the correct position for assembly.

According to yet another aspect of the invention, the connecting member is capable of bending so that the securing member can rotate towards the connecting member by at least 270° from its rest position. In this case too, "bending" is understood to mean the connecting member folding over, that is to say, rotating in a plane that cuts the surface of the strip perpendicularly and longitudinally. Again, "rest position" means the natural position based on the balance of forces between the weight of the connecting member plus the weight of the securing member with the resistance to bending for a given orientation of the main part. In this way, and by rotating by at least 270°, a securing member in the form of a screw, or expandable peg, or pin, can be oriented and placed in the right position for insertion into the corresponding hole and assembly thereof.

Consequently, depending on the type of securing member used in the securing device, the connecting member is designed to have one or other geometric characteristics, which enable it to bend on itself to a greater or lesser degree.

According to the invention, the connecting member connecting the securing member to the main body is designed to break when the securing member goes from the rest position to the position of use. This still has the advantage that the operator fitting the securing member has the latter to hand at the point of assembly, without requiring additional logistics or leading to possible positioning errors. The breakage occurs in the assembly phase, when the securing member attains the position of use.

The invention further comprises a vehicle part comprising the securing device as described above.

The attached drawings show, by way of non-limiting example, a securing device for a vehicle part according to the invention. Further features and advantages of said securing device for a vehicle part, forming the subject matter of the present invention, will become apparent from the description of a preferred, but not exclusive, embodiment which is illustrated by way of non-limiting example in the accompanying drawings, in which:

### BRIEF DESCRIPTION OF THE DRAWINGS

Figure 1 is a perspective view of the securing device for a vehicle part according to the present invention.
Figure 2 is a perspective view of the detail "A" of the securing device for a vehicle part according to the present invention.
Figure 3 is a perspective view of the detail "B" of the securing device for a vehicle part according to the present invention.
Figure 4 is a perspective view of the detail "C" of the securing device for a vehicle part according to the present invention.
Figure 5 is a perspective view of the action of mounting a device in the form of a plug for securing a vehicle part, according to the present invention.
Figure 6 is a perspective view of the action of mounting a device in the form of a screw or pin for securing a vehicle part, according to the present invention.

### DESCRIPTION OF A PREFERRED EMBODIMENT

With reference to the abovementioned figures and according to the reference signs used, these figures show an exemplary preferred embodiment of the invention, which comprises the parts and elements indicated and described in detail below.

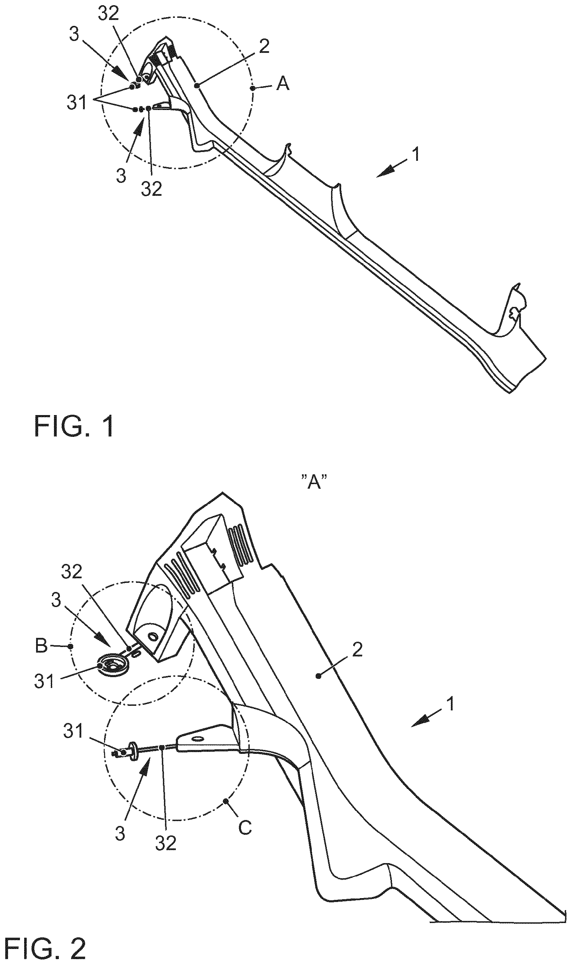

Thus, as can be seen in Figures 2, 4 and 6, the securing device 3 for a vehicle part 1, in which the part 1 is made of plastic, obtained by injection moulding, and in which the part 1 comprises a main body 2, comprises a securing member 31 and a member 32 for connecting said securing member 31 to the main body 2, in which the main body 2 and the securing device 3 are obtained by means of the same injection moulding process, and in which the connecting member 32 is elongate.

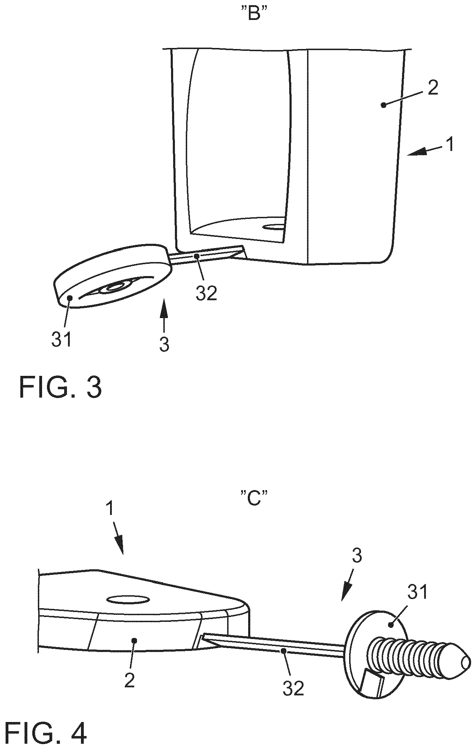

More particularly, as can be seen in Figures 2, 4 and 6, the connecting member 32 is elongate, such that the length thereof is greater than a length of the securing member 31. According to a preferred embodiment of the invention, as can be seen in Figures 3 and 4, the connecting member 32 is substantially in the form of a strip such that the thickness thereof is substantially less than a width of the connecting member 32.

Thus, Figure 1 shows an internal part 1 of a vehicle comprising at least one securing device 3. In particular, the part is a vehicle door trim covering the lower lateral area of the vehicle. This part 1 is positioned with respect to the vehicle and secured thereto by means of holes through which bolts on the vehicle body pass. These holes may be seen in more detail in Figure 2, these holes being in areas which are not visible when the vehicle is assembled. In order to facilitate the mounting process and the logistics required during assembly, the part 1 incorporates the required securing member 31, said securing member 31 being attached to the part 1 by a connecting member 32. The geometric characteristics of the connecting member 32 described together with the properties of the material allow the securing member 31 to be moved easily with respect to the part 1, facilitating the tasks of manipulation by an operator on the assembly line.

It should be mentioned that, as can be understood from the figures, the injection moulding process comprises a single step of injection moulding in the same injection mould.

More particularly, as can be seen in Figures 3 and 4, the connecting member 32 and the securing member 31 are substantially perpendicular to the direction of demoulding from the injection mould. All of this means that the costs of production of the part 1 are not increased and, in fact, assembly times are reduced considerably, as are the transport and logistics costs, by having a part 1 that already incorporates the at least one securing member 31. Manufacturing is also simplified, since both the part 1 and the securing member 31 are obtained from the same mould, the entire component being obtained without additional steps or sliders.

According to another aspect of the invention, as can be seen in Figure 1, the part 1 is an internal component of the vehicle, in which the part 1 is visible from the passenger compartment of the vehicle.

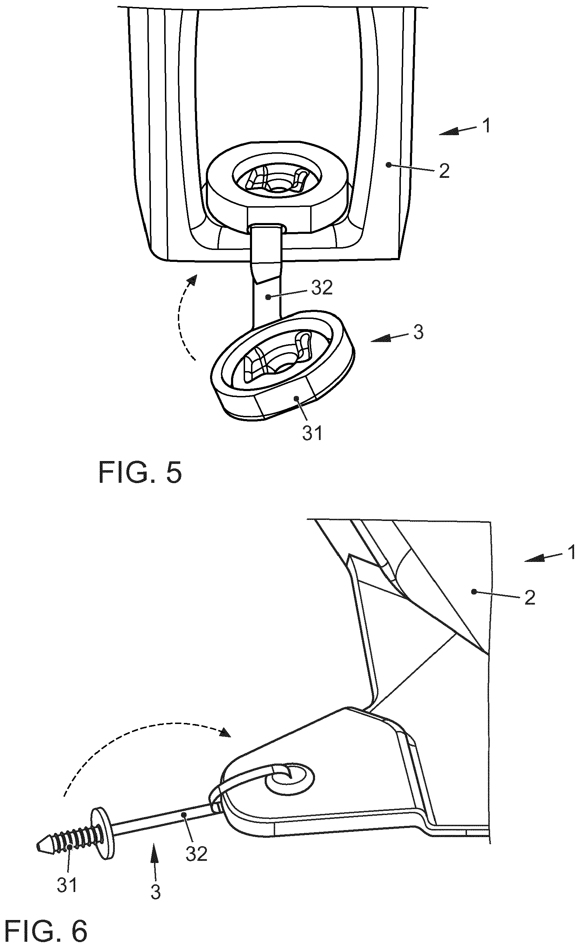

More specifically, as can be seen in Figures 3 and 5, the securing member 31 is a plug. In order to secure the bolts and prevent relative movement of the part 1 with respect to the vehicle body, a securing member 31 as shown in Figure 3 is required. This securing member 31 is a plug with at least one tooth which prevents the movement of removal of the plug from the bolt once said securing member 31 is in the position of use.

Alternatively, as can be seen in Figures 4 and 6, the securing member 31 is a screw or an expandable peg or a pin. Likewise, in order to position the part 1 with respect to the vehicle body, a pin or expandable peg will be passed through a hole in the part 1 and through a hole in the vehicle body. It may also be used as a sealing member to plug an aperture or hole in the vehicle body.

According to a preferred embodiment of the invention, as can be seen in Figure 5, the connecting member 32 is capable of bending so that the securing member 31 can rotate towards the connecting member 32 by at least 180° from its rest position. To be specific, when the connecting member 32 is in the form of a plug, the operator must perform a rotation of 180° in order to rotate the securing member 31 from its rest position or position after injection moulding (perpendicular to the direction of demoulding) to the position of use. The connecting member 32 allows the necessary path to be completed for correct mounting of the securing member 31.

According to another preferred embodiment of the invention, as can be seen in Figure 6, the connecting member 32 is capable of bending so that the securing member 31 can rotate towards the connecting member 32 by at least 270° from its rest position. To be specific, when the connecting member 32 is in the form of a screw, expandable plug or pin, the operator must perform a rotation of 270° in order to rotate the securing member 31 from its rest position or position after injection moulding (perpendicular to the direction of demoulding) to the position of use. The connecting member 32 allows the necessary path to be completed for correct mounting of the securing member 31.

As can be seen in Figures 1 and 2, the present invention also relates to a vehicle part 1 comprising the securing device 3 according to Claim 1.

The details, shapes, dimensions and other accessory elements, and the components used in the implementation of the securing device for a vehicle part may be easily replaced by others without departing from the invention as defined by the claims which follow the list below.

### List of reference signs:

- 1: part
- 2: main body
- 3: securing device
- 31: securing member
- 32: connecting member

## Claims

1. Vehicle part (1) comprising a securing device (3), in which the part (1) is made of plastic, obtained by injection moulding, in which the part (1) comprises a main body (2), and in which the securing device (3) comprises a securing member (31) and a connecting member (32) for connecting said securing member (31) to the main body (2), the main body (2) and the securing device (3) are obtained by means of the same injection moulding process, wherein the connecting member (32) is elongate, the connecting member (32) and the securing member (31) being arranged substantially in the same plane, wherein said plane is perpendicular to the direction of demoulding, and wherein the connecting member (32) is configured to break when the securing member (31) goes from a rest position to a position of use.

2. Vehicle part (1) comprising a securing device (3), according to Claim 1, **characterized in that** the connecting member (32) is elongate such that the length thereof is greater than a length of the securing member (31).

3. Vehicle part (1) comprising a securing device (3), according to Claim 1, **characterized in that** the connecting member (32) is substantially in the form of a strip such that the thickness thereof is substantially less than a width of the connecting member (32).

4. Vehicle part (1) comprising a securing device (3), according to Claim 1, **characterized in that** the injection moulding process comprises a single step of injection moulding in the same injection mould.

5. Vehicle part (1) comprising a securing device (3), according to Claim 1, **characterized in that** the part (1) is an internal component of the vehicle, in which the part (1) is visible from the passenger compartment of the vehicle.

6. Vehicle part (1) comprising a securing device (3), according to Claim 1, **characterized in that** the securing member (31) is a plug.

7. Vehicle part (1) comprising a securing device (3), according to Claim 1, **characterized in that** the securing member (31) is a screw or an expandable peg or a pin.

8. Assembly method of a securing device (3) of a vehicle part (1) in which the part (1) is made of plastic, obtained by injection moulding, in which the part (1) comprises a main body (2), and in which the securing device (3) comprises a securing member (31) and a connecting member (32) for connecting said securing member (31) to the main body (2), the main body (2) and the securing device (3) being obtained by means of the same injection moulding process, wherein the connecting member (32) is elongate, the connecting member (32) and the securing member (31) being arranged substantially in the same plane, wherein said plane is perpendicular to the direction of demoulding, and wherein the assembly method further comprises the step of breaking the connecting member (32) when the securing member (31) goes from a rest position to a position of use.

## Patentansprüche

1. Fahrzeugteil (1), umfassend eine Sicherungsvorrichtung (3), wobei das Teil (1) aus durch Spritzguss erhaltenem Kunststoff hergestellt ist, wobei das Teil (1) einen Hauptkörper (2) umfasst und wobei die Sicherungsvorrichtung (3) ein Sicherungsglied (31) und ein Verbindungsglied (32) umfasst, um das Sicherungsglied (31) mit dem Hauptkörper (2) zu verbinden, wobei der Hauptkörper (2) und die Sicherungsvorrichtung (3) mit demselben Spritzgussverfahren erhalten werden, wobei das Verbindungsglied (32) länglich ist, das Verbindungsglied (32) und das Sicherungsglied (31) im Wesentlichen in der gleichen Ebene angeordnet sind, wobei die Ebene senkrecht zur Entformungsrichtung verläuft und wobei das Verbindungsglied (32) so ausgebildet ist, dass es bricht, wenn das Sicherungsglied (31) aus einer Ruheposition in eine Gebrauchsposition übergeht.

2. Fahrzeugteil (1), umfassend eine Sicherungsvorrichtung (3), nach Anspruch 1, **dadurch gekennzeichnet, dass** das Verbindungsglied (32) länglich ist, sodass dessen Länge größer als eine Länge des Sicherungsglieds (31) ist.

3. Fahrzeugteil (1), umfassend eine Sicherungsvorrichtung (3), nach Anspruch 1, **dadurch gekennzeichnet, dass** das Verbindungsglied (32) im Wesentlichen die Form eines Streifens aufweist, sodass dessen Dicke im Wesentlichen geringer als eine Breite des Sicherungsglieds (32) ist.

4. Fahrzeugteil (1), umfassend eine Sicherungsvorrichtung (3), nach Anspruch 1, **dadurch gekennzeichnet, dass** das Spritzgussverfahren einen einzigen Spritzgussschritt in derselben Spritzgussform umfasst.

5. Fahrzeugteil (1), umfassend eine Sicherungsvorrichtung (3), nach Anspruch 1, **dadurch gekennzeichnet, dass** das Teil (1) eine innere Komponente des Fahrzeugs ist, wobei das Teil (1) vom Fahrgastraum des Fahrzeugs aus zu sehen ist.

6. Fahrzeugteil (1), umfassend eine Sicherungsvorrichtung (3), nach Anspruch 1, **dadurch gekennzeichnet, dass** das Sicherungsglied (31) ein Stopfen ist.

7. Fahrzeugteil (1), umfassend eine Sicherungsvorrichtung (3), nach Anspruch 1, **dadurch gekennzeichnet, dass** das Sicherungsglied (31) eine Schraube oder ein Dehnstab oder ein Stift ist.

8. Montageverfahren einer Sicherungsvorrichtung (3) eines Fahrzeugteils (1), wobei das Teil (1) aus durch Spritzguss erhaltenem Kunststoff hergestellt ist, wobei das Teil (1) einen Hauptkörper (2) umfasst und wobei die Sicherungsvorrichtung (3) ein Sicherungsglied (31) und ein Verbindungsglied (32) umfasst, um das Sicherungsglied (31) mit dem Hauptkörper (2) zu verbinden, wobei der Hauptkörper (2) und die Sicherungsvorrichtung (3) mit demselben Spritzgussverfahren erhalten werden, wobei das Verbindungsglied (32) länglich ist, das Verbindungsglied (32) und das Sicherungsglied (31) im Wesentlichen in der gleichen Ebene angeordnet sind, wobei die Ebene senkrecht zur Entformungsrichtung verläuft und wobei das Montageverfahren ferner den Schritt des Brechens des Verbindungsglieds (32) umfasst, wenn das Sicherungsglied (31) aus einer Ruheposition in eine Gebrauchsposition übergeht.

## Revendications

1. Partie de véhicule (1) comprenant un dispositif de fixation (3), dans lequel la partie (1) est fabriquée en plastique, obtenue par moulage par injection, dans lequel la partie (1) comprend un corps principal (2), et dans lequel le dispositif de fixation (3) comprend un organe de fixation (31) et un organe de connexion (32) pour connecter ledit organe de fixation (31) au corps principal (2), le corps principal (2) et le dispositif de fixation (3) sont obtenus au moyen du même procédé de moulage par injection, où l'organe de connexion (32) est allongé, l'organe de connexion (32) et l'organe de fixation (31) étant disposés substantiellement dans le même plan, où ledit plan est perpendiculaire au sens de démoulage et où l'organe de connexion (32) est configuré pour casser lorsque l'organe de fixation (31) passe d'une position de repos à une position d'utilisation.

2. Partie de véhicule (1) comprenant un dispositif de fixation (3), selon la revendication 1, **caractérisé en ce que** l'organe de connexion (32) est allongé de sorte que sa longueur soit supérieure à une longueur de l'organe de fixation (31).

3. Partie de véhicule (1) comprenant un dispositif de fixation (3), selon la revendication 1, **caractérisé en ce que** l'organe de connexion (32) est substantiellement en forme de bande de sorte que son épaisseur soit substantiellement inférieure à une largeur de l'organe de connexion (32).

4. Partie de véhicule (1) comprenant un dispositif de fixation (3), selon la revendication 1, **caractérisé en ce que** le procédé de moulage par injection comprend une unique étape de moulage par injection dans le même moule à injection.

5. Partie de véhicule (1) comprenant un dispositif de fixation (3), selon la revendication 1, **caractérisé en ce que** la partie (1) est un élément interne du véhicule, dans lequel la partie (1) est visible depuis l'habitacle du véhicule.

6. Partie de véhicule (1) comprenant un dispositif de fixation (3), selon la revendication 1, **caractérisé en ce que** l'organe de fixation (31) est un bouchon.

7. Partie de véhicule (1) comprenant un dispositif de fixation (3), selon la revendication 1, **caractérisé en ce que** l'organe de fixation (31) est une vis ou une cheville extensible ou une broche.

8. Procédé d'assemblage d'un dispositif de fixation (3) d'une partie de véhicule (1) dans lequel la partie (1) est fabriquée en plastique, obtenue par moulage par injection, dans lequel la partie (1) comprend un corps principal (2), et dans lequel le dispositif de fixation (3) comprend un organe de fixation (31) et un organe de connexion (32) pour connecter ledit organe de fixation (31) au corps principal (2), le corps principal (2) et le dispositif de fixation (3) étant obtenus au moyen du même procédé de moulage par injection, où l'organe de connexion (32) est allongé, l'organe de connexion (32) et l'organe de fixation (31) étant disposés substantiellement dans le même plan, où ledit plan est perpendiculaire au sens de démoulage, et où le procédé d'assemblage comprend en outre l'étape de cassure de l'organe de connexion (32) lorsque l'organe de fixation (31) passe d'une position de repos à une position d'utilisation.
